# DEMANDE DE BREVET EUROPEEN

(11) **EP 0 841 519 A1**
(43) Date de publication de la demande: **13.05.1998**
(21) Numéro de dépôt: 97420205.3
(22) Date de dépôt: 06.11.1997
(51) Int. Cl.: F23G 5/16, F23G 5/46, F23G 5/04, F23G 5/033, F23H 3/02, F23L 9/00, F23L 15/00

(54) **Procédé et installation de traitement par combustion de déchets, et de récupération de chaleur**

(30) Priorité: 07.11.1996 FR 9613836
(71) Demandeur: Perge Société à Responsabilité Limitée, 26800 Portes les Valence (FR)
(72) Inventeur: Perge, Franck, 26000 Valence (FR)
(74) Mandataire: Thibault, Jean-Marc

(57) **Abrégé**

- L'invention concerne un procédé de traitement par combustion de déchets (1) et de récupération de chaleur.
- Selon l'invention, le procédé consiste :
   - à créer un foyer de combustion (**2**) dans un four (**I**),
   - à alimenter en déchets le foyer de combustion (**2**) dans lequel est amené un premier comburant, de manière à brûler les déchets et à obtenir des fumées de combustion (**f**),
   - à canaliser les fumées de combustion (**f**) dans une chambre de postcombustion dans laquelle est amené un second comburant,
   - à assurer l'inflammation des fumées (**f**) pour assurer la combustion des fumées et l'obtention de gaz et fumées,
   - et à faire circuler les gaz et fumées dans un échangeur de chaleur dont le foyer est constitué par la chambre de postcombustion.

## Description

La présente invention concerne le domaine technique du traitement par calcination, incinération ou combustion de déchets au sens général.

L'invention trouve une application par exemple, dans le domaine de l'incinération de déchets de nature végétale ou à caractère industriel banal, tels que par exemple palettes ou cartons et trouve une application particulièrement avantageuse pour le traitement des déjections d'animaux et en particulier, les fientes de volailles.

L'élimination des déchets du secteur industriel ou ménager est un problème délicat à résoudre en raison, d'une part, de l'augmentation rapide du volume des déchets et, d'autre part, des normes liées à l'environnement rendant de plus en plus difficile leur élimination, notamment, par épandage ou enfouissement.

Dans l'état de la technique, il est connu d'éliminer des déchets en les traitant par incinération. Il est connu de nombreux types d'installations permettant de traiter les déchets par combustion. Il apparaît que de telles installations sont relativement complexes et ne permettent pas d'envisager la réalisation d'installations d'incinération présentant une capacité de traitement relativement faible tout en offrant une rentabilité satisfaisante. Or, il est clair qu'il apparaît le besoin de disposer de telles installations de manière à pouvoir traiter des déchets sur un site proche de leur lieu de production, afin d'éviter leur transport. Tel est le cas, notamment, pour les fientes de volailles issues de sites dispersés sur le territoire. Par ailleurs, il s'avère nécessaire de maîtriser les paramètres des gaz et fumées produits lors de la combustion, afin de respecter l'environnement.

Il est ainsi connu, par exemple par la demande de brevet français n° **2 733 031**, une installation de traitement par combustion de déchets comportant une première enceinte verticale dans la partie supérieure de laquelle est formée une réserve de déchets qui s'écoulent par gravité dans une chambre de combustion des déchets. La chambre de combustion est délimitée par une paroi tubulaire en tronc de cône assurant le confinement des déchets autour d'un foyer central orienté verticalement et percé suivant son épaisseur de lumières traversantes. La chambre de combustion est alimentée par un comburant primaire assurant la combustion des déchets, dont les gaz traversent les lumières pour être recueillis dans la chambre interne de combustion du foyer, afin d'être dirigés par un conduit, dans une chambre de post-combustion ménagée dans une seconde enceinte. La chambre de post-combustion est pourvue d'une entrée d'air secondaire, afin d'assurer la combustion des gaz. L'installation comporte également un générateur de vapeur alimenté par la chaleur dégagée par la postcombustion des gaz.

L'installation décrite par cette demande de brevet présente un inconvénient majeur, dans la mesure où les déchets sont accumulés dans une chambre supérieure sous la forme d'un lit de matière compacte. Il s'ensuit une difficulté pour la combustion des déchets, ce qui nuit au fonctionnement normal de l'installation.

L'objet de l'invention vise à remédier aux inconvénients énoncés ci-dessus, en proposant un procédé de traitement de déchets par combustion, permettant une combustion complète des déchets et sans aléas de fonctionnement, une maîtrise des fumées issues du processus de traitement et une capacité de traitement relativement faible avec une rentabilité satisfaisante.

L'objet de l'invention vise donc à satisfaire l'objectif exprimé ci-dessus en proposant un procédé assurant le traitement par combustion des déchets et la récupération de la chaleur produite lors de la combustion.

Selon l'invention, le procédé consiste :
- à créer un foyer de combustion dans un four,
- à alimenter en déchets le foyer de combustion dans lequel est amené un premier comburant, de manière à brûler les déchets et à obtenir des fumées de combustion,
- à canaliser les fumées de combustion dans une chambre de postcombustion dans laquelle est amené un second comburant,
- à assurer l'inflammation des fumées pour assurer la combustion des fumées et l'obtention de gaz et fumées,
- et à faire circuler les gaz et fumées dans un échangeur de chaleur dont le foyer est constitué par la chambre de postcombustion.

L'objet de l'invention vise également à proposer une installation de traitement par combustion de déchets et de récupération de chaleur.

Selon l'invention, l'installation comporte :
- un four de combustion comprenant :
   . un foyer de combustion pourvu d'un orifice de déversement des déchets amenés par des moyens d'approvisionnement,
   . des moyens de fourniture d'un premier comburant pour permettre la combustion des déchets et l'obtention de fumées de combustion,
   . un système de canalisation des fumées de combustion,
- une chaudière de chauffage comportant :
   . une chambre de postcombustion dans laquelle débouchent le système de canalisation des fumées et des moyens de fourniture d'un second comburant pour assurer la combustion des fumées dans la chambre de postcombustion, en vue d'obtenir des gaz et fumées,
   . et un échangeur de chaleur entre un circuit de circulation d'un fluide caloporteur et un circuit de circulation des gaz et fumées issus de la chambre de postcombustion.

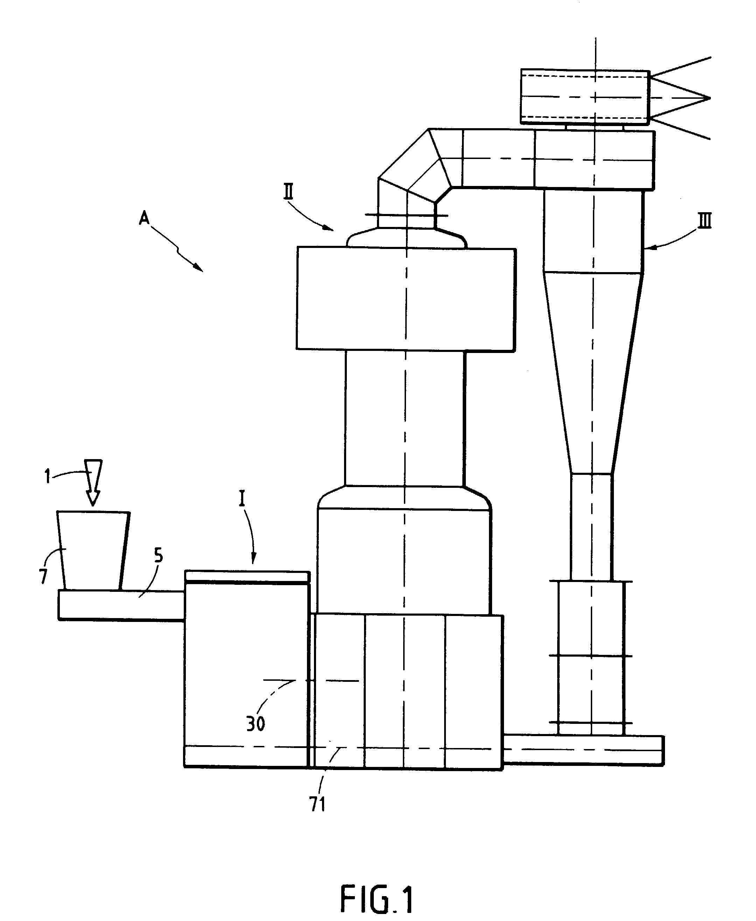

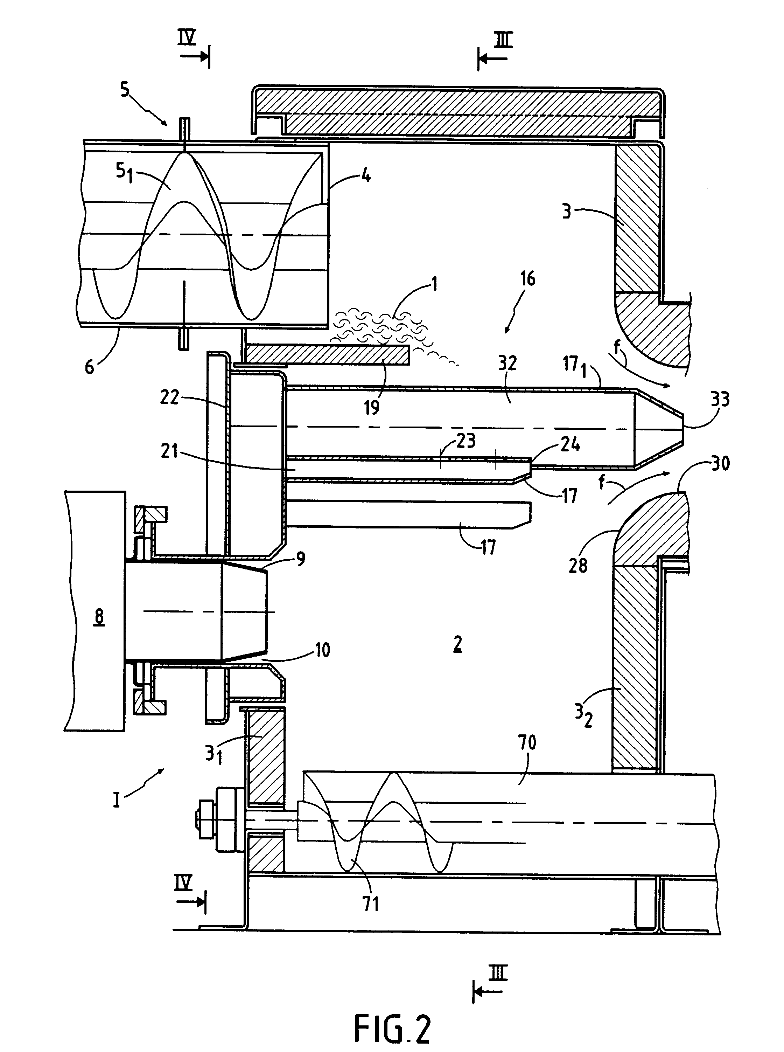

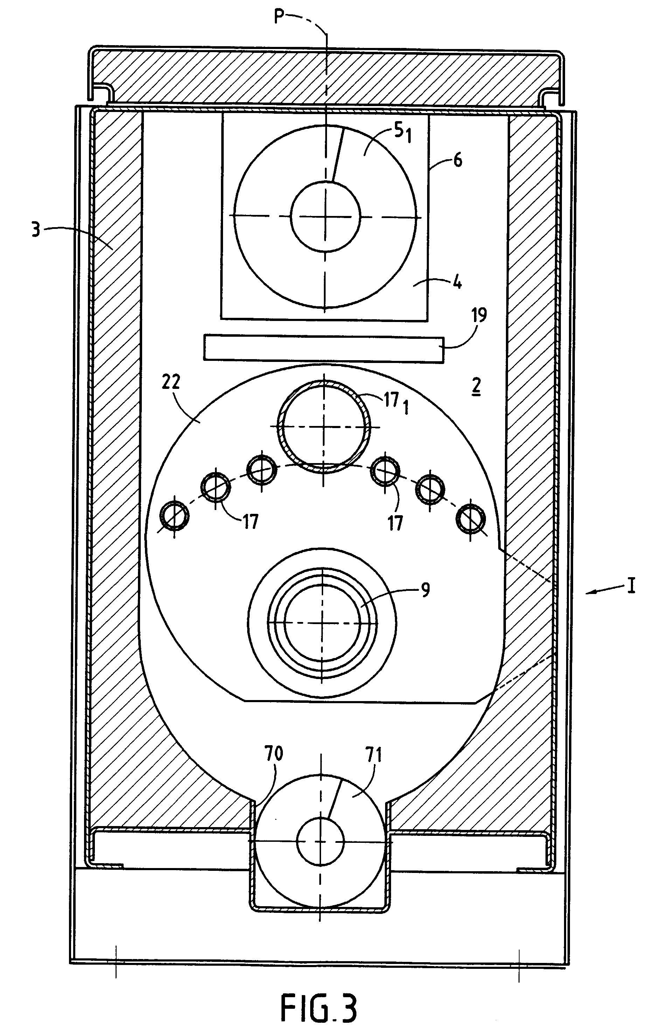

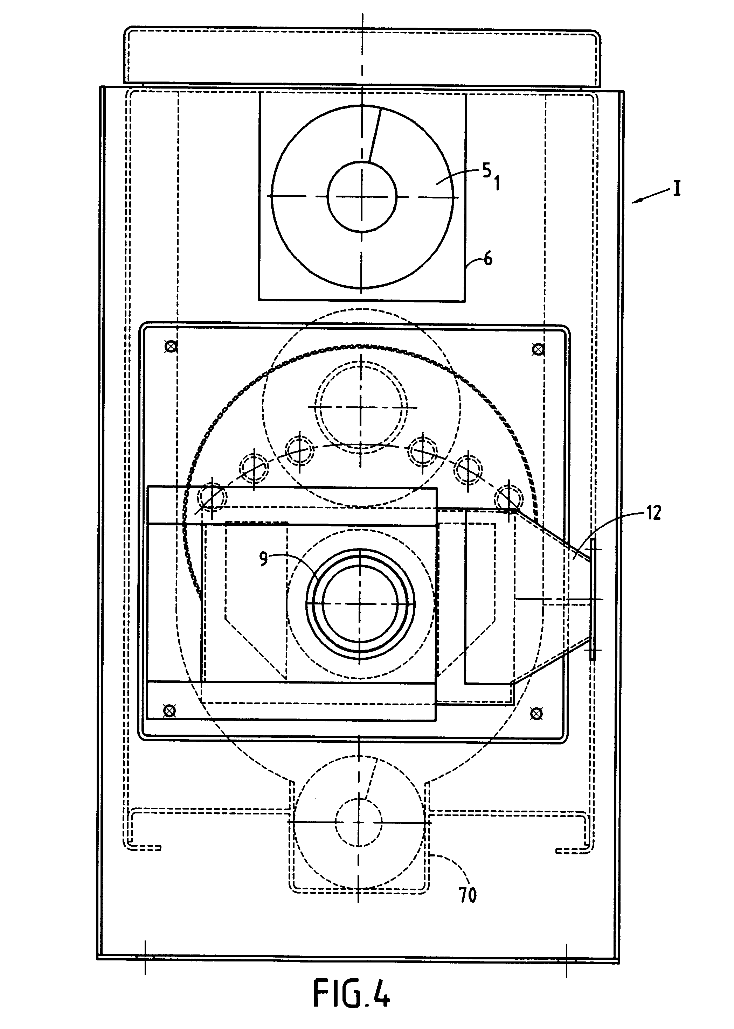

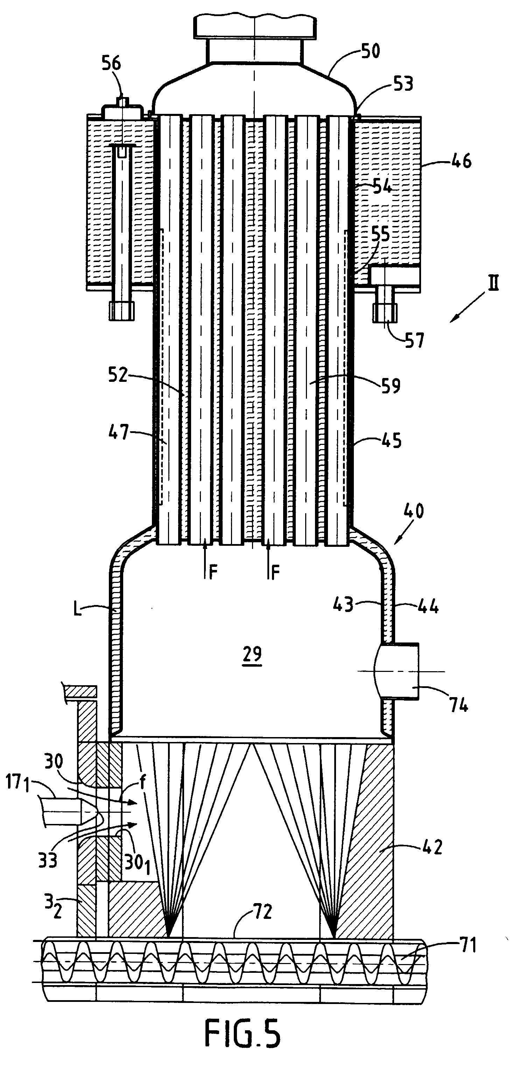

   Diverses autres caractéristiques ressortent de la description faite ci-dessous en référence aux dessins annexés qui montrent, à titre d'exemples non limitatifs, des formes de réalisation et de mise en oeuvre de l'objet de l'invention.
   La **fig. 1** est une vue générale d'une installation de traitement conforme à l'invention.
   La **fig. 2** est une vue en coupe-élévation d'un four de combustion mis en oeuvre dans l'installation selon l'invention.
   La **fig. 3** est une vue en coupe transversale du four de combustion, prise sensiblement selon les lignes III-III de la **fig. 2**.
   La **fig. 4** est une vue en coupe transversale du four de combustion, prise sensiblement selon les lignes IV-IV de la **fig. 2**.
   La **fig. 5** est une vue en coupe-élévation d'une unité de récupération de chaleur utilisée dans l'installation selon l'invention.
   Tel que cela apparaît plus précisément à la **fig. 1**, l'installation **A** selon l'invention est destinée à assurer le traitement par combustion ou incinération de déchets **1** au sens général, se présentant naturellement ou à la suite d'un traitement approprié, sous la forme d'éléments individualisés, de particules ou de granulés. A titre d'exemples non limitatifs, les déchets **1** peuvent être constitués par des produits forestiers provenant, par exemple, d'élagages, ou par des cartons ou des palettes traités préalablement par un broyeur associé ou non à l'installation **A**. Selon une caractéristique préférée de réalisation, les déchets **1** sont constitués par des déjections de volailles qui sont généralement combinées à des copeaux de bois. L'installation de traitement **A** comporte un four **I** de combustion ou de calcination des déchets, suivi par une unité **II** de récupération de chaleur dont les gaz et fumées de sortie sont recueillis par une unité de traitement **III**.
   Tel que cela ressort plus précisément des **fig. 2** à **4**, le four de calcination ou de combustion **I** comporte un foyer de combustion 2 délimité par une enveloppe fermée **3** à caractère réfractaire. Le foyer de combustion **2** comporte un orifice **4** de déversement des déchets **1** qui sont amenés par l'intermédiaire d'un moyen d'approvisionnement **5** qui, dans l'exemple illustré, est constitué par l'intermédiaire d'une vis sans fin **5**_{**1**} montée à l'intérieur d'un tube **6** débouchant, par exemple, à la base d'une trémie **7** dans laquelle les déchets **1** sont déversés directement ou après avoir subi un broyage préalable. Le tube **6** traverse la paroi avant **3**_{**1**} du four pour déboucher, dans l'exemple illustré, à la partie haute du foyer de combustion **2**. De préférence, le tube **6** est centré sur le plan médian ou de symétrie transversal **P** du foyer de combustion **2**.
   Le four de combustion **I** comporte également un brûleur **8** de tous types connus en soi, par exemple, au fuel ou au gaz. Le brûleur **8** est équipé d'un conduit tubulaire **9** débouchant à l'intérieur du foyer de combustion **2** en traversant un orifice **10** ménagé dans la paroi avant **3**_{**1**}. Selon une caractéristique préférée de réalisation, le brûleur **8** est monté sur un chariot non représenté permettant de retirer le tube **9** de l'intérieur du foyer **2**. L'orifice **10** peut être fermé par un volet d'obturation **12 (fig. 4)**.
   Le four de combustion **I** comporte également un système **16** de dispersion des déchets à l'intérieur du foyer de combustion **2**. Dans l'exemple illustré, le système de dispersion **16** est constitué par une grille montée à l'intérieur du foyer **2** à un niveau intermédiaire entre l'orifice de déversement **4** et le brûleur **8**. Tel que cela ressort plus précisément des **fig. 2** et **3**, la grille de dispersion ou de répartition **16** est constituée, dans l'exemple illustré, par des tubes **17** s'étendant en porte-à-faux à partir de la paroi avant **3**_{**1**} et sur la majeure partie de la longueur du foyer de combustion **2**. Tel que cela ressort plus précisément de la **fig. 3**, les tubes **17** sont également répartis sur toute la largeur du foyer **2**. Dans l'exemple illustré, la grille **16** est également formée par l'intermédiaire d'un tube central **17**_{**1**} de part et d'autre duquel sont positionnés, dans l'exemple, trois tubes **17** de section plus petite que la section du tube **17**_{**1**}**.** Le tube **17**_{**1**} est centré sur le plan de symétrie **P** en étant placé à un niveau supérieur par rapport aux tubes **17** dont leurs centres sont situés sur la courbure convexe d'un cercle.
   De préférence, le système de dispersion **16** est complété par une platine **19** placée en dessous et s'étendant au-delà de l'orifice de déversement **4**, de manière à permettre un déversement régulier des déchets à l'intérieur du foyer de combustion, comme cela sera mieux compris dans la suite de la description. Bien entendu, il peut être prévu d'assurer la dispersion des déchets **1** à l'intérieur du foyer par l'intermédiaire de moyens différents. Une telle répartition peut, par exemple, être assurée au niveau de l'introduction des déchets, à l'aide notamment d'une hélice de dispersion, combinée éventuellement à une soufflerie.
   Selon une caractéristique de l'invention, le foyer de combustion **2** est équipé de moyens **21** de fourniture d'un premier comburant pour permettre la combustion des déchets **1**. Par exemple, le comburant est de l'air. Selon une caractéristique avantageuse de l'invention, les moyens de fourniture **21** sont constitués par le volume interne des tubes **17** raccordés à un boîtier collecteur **22** qui est relié à un ventilateur non représenté. Les tubes **17** comportent des orifices radiaux de sortie **23** ménagés, de préférence, à leur partie supérieure et des orifices axiaux de sortie **24** aménagés pour orienter l'air vers le haut du foyer.
   Il doit être compris que le premier comburant est amené à l'intérieur du foyer **2** pour permettre par le brûleur **8**, d'assurer la combustion des déchets **1**. Il est à noter que le premier comburant, tel que de l'air, est également apporté à l'intérieur du foyer **2** par l'intermédiaire du moyen d'approvisionnement **5**. En effet, les déchets **1** sont amenés à l'intérieur du foyer **2** en combinaison d'un flux d'air. Le premier comburant est amené en quantité nécessaire pour permettre la combustion des déchets produisant des fumées de combustion représentées symboliquement par des flèches **f**.
   Selon une autre caractéristique de l'invention, le foyer de combustion **2** est aménagé pour présenter un système **28** conçu pour canaliser les fumées de combustion **f** en direction d'une chambre **29** de postcombustion (**fig. 5**). Dans l'exemple illustré, le système de canalisation **28** est constitué par un canal **30** formant venturi s'évasant à l'intérieur du foyer de combustion **2** pour déboucher à l'intérieur de la chambre de postcombustion **29**.
   Selon l'invention, le système de canalisation des fumées de combustion **28** est réalisé en relation de la sortie de moyens **32** de fourniture d'un second comburant. Dans l'exemple illustré, les moyens **32** de fourniture du second comburant sont constitués par le tube central **17** s'étendant en porte-à-faux à partir du boîtier de raccordement **22** et constituant une canne d'amenée d'air. Le tube **17**_{**1**} s'étend dans le foyer au-delà des tubes **17** pour déboucher par son orifice axial **33** à l'entrée du canal **30** pour amener le second comburant dans cette zone et assurer la combustion complète des fumées issues de la combustion des déchets.
   Dans l'exemple illustré, le canal **30** est réalisé dans la paroi arrière **3**_{**2**} du foyer. Les fumées de combustion **f** sont donc canalisées vers l'arrière du foyer sensiblement à un niveau intermédiaire du foyer **2**. Il est à noter que le système de canalisation **28** peut être conçu pour orienter les fumées vers le haut du foyer **2**. Selon cette variante, la chambre de postcombustion **29** est placée au-dessus du foyer **2**. Dans le même sens, il peut être prévu d'inverser la position entre le moyen d'approvisionnement **5** et les moyens **32** de fourniture du second comburant. Dans cette forme de réalisation, le moyen d'approvisionnement **5** débouche sensiblement dans la partie médiane du foyer **2**, tandis que les moyens de fourniture **32** sont situés dans la partie supérieure du foyer.
   Selon une caractéristique avantageuse de l'invention, la chambre de postcombustion **29** constitue le foyer d'un échangeur de chaleur **40** d'une chaudière de chauffage. La chambre de postcombustion **29** est délimitée, en partie basse, par la paroi interne d'un socle **42** dans lequel débouche le canal **30** par un orifice **30**_{**1**}. La chambre de postcombustion **29** est délimitée, en partie haute, par une enveloppe **43** délimitant avec une coiffe **44**, une capacité lamellaire **L**. La coiffe **44** est reliée à l'une des extrémités d'une virole **45** de section par exemple, circulaire, dont l'autre extrémité est reliée à une chambre de mélange **46**. L'échangeur de chaleur **40** comporte une série de tubes échangeurs **47** traversant la virole **45** en s'étendant sensiblement parallèlement entre-eux et en étant espacés les uns des autres. Les tubes échangeurs **47** sont fixés par leur pied, sur l'enveloppe **43** et par leur sommet, sur la chambre de mélange **46** en la traversant. Les tubes échangeurs **47** s'ouvrent donc, par une de leurs extrémités, à l'intérieur de la chambre de postcombustion **29** et, par l'autre de leurs extrémités, à l'intérieur d'une boîte de collecte **50** connectée à l'unité de traitement **III**.
   Les tubes échangeurs **47** constituent, par leurs parois, des capacités d'échange avec un circuit **52** de circulation d'un fluide caloporteur destiné à être contenu à l'intérieur de la chambre de mélange **46**, de la virole **45** et de la capacité lamellaire **L**. De préférence, la circulation du fluide caloporteur entre la chambre de mélange **46** et l'intérieur de la virole **45**, s'effectue, d'une part, par l'intermédiaire d'un passage annulaire **53** subsistant entre un prolongement tubulaire **54** de la virole et la paroi supérieure de la chambre de mélange et, d'autre part, par des ouvertures **55** ménagées dans la partie basse du prolongement **54**. La chambre de mélange **46** comporte également une canalisation de départ **56** et une canalisation de retour **57** permettant d'utiliser le fluide caloporteur dans une installation de chauffage adaptée.
   Les tubes échangeurs **47** constituent intérieurement un circuit **59** de circulation pour les gaz et fumées **F** issus de la chambre de postcombustion **29**. Selon une caractéristique avantageuse, la chambre de postcombustion **29** peut être équipée d'un brûleur auxiliaire non représenté, de tous types connus, tels que par exemple au fuel. Les gaz et fumées sortant de la boîte de collecte **50** sont destinés à être recueillis par l'unité de traitement **III** qui peut être constituée par exemple, par un cyclone de tous types connus en soi.
   Le fonctionnement de l'installation de traitement **A** selon l'invention découle directement de la description qui précède. Les déchets **1** sont amenés par le moyen d'approvisionnement **5** à l'intérieur du foyer de combustion **2**. Les déchets **1** sont amenés en continu pour se déverser à partir de l'orifice **4** sur la platine de réception **19** sur laquelle ils forment un tas. A partir du tas ainsi constitué, les déchets sont destinés à tomber de manière sensiblement continue, à l'intérieur du foyer en direction des tubes de répartition ou de distribution **17** et **17**_{**1**}. La disposition des tubes **17, 17**_{**1**} à l'intérieur du foyer permet d'assurer la dispersion des déchets et d'éviter que les déchets **1** tombent directement dans le fond du foyer **2**. Le fonctionnement du brûleur **8** combiné à l'amenée du premier comburant au niveau des tubes de répartition **17, 17**_{**1**} permet d'assurer une combustion totale des déchets **1** au sein du foyer **2**. Les fumées de combustion **f** sont conduites naturellement à l'intérieur du canal **30**, à l'entrée duquel débouche le second comburant qui se trouve avantageusement réchauffé par son passage à l'intérieur du tube **17**_{**1**} situé à l'intérieur du foyer de combustion **2**. La présence combinée des fumées de combustion **f** et du second comburant chaud permet d'obtenir une postcombustion des fumées **f**. Il apparaît ainsi une flamme de combustion qui s'étend à partir du foyer **2** dans le canal jusque dans la chambre de postcombustion **29**. Il s'ensuit que les fumées **f** subissent une combustion complète permettant d'obtenir des gaz et fumées représentés par des flèches **F** et qui s'élèvent à l'intérieur des tubes échangeurs **47**.
   Le four **I** selon l'invention permet d'obtenir une combustion pratiquement complète de tous les déchets apportés à l'intérieur du foyer **2**. Les déchets solides non combustibles sont recueillis à la base du foyer de combustion à l'intérieur d'une goulotte **70** aménagée dans le fond du four. La goulotte **70** est équipée d'un moyen d'extraction **71**, tel qu'une vis sans fin.
   La chambre de postcombustion **29** pour les fumées **f** constitue avantageusement le foyer de l'échangeur de chaleur **40** permettant de récupérer les calories échangées à partir des tubes **47**, par le circuit de circulation de fluide caloporteur. Le fluide caloporteur peut être utilisé à partir des canalisations **56, 57**, dans une installation de chauffage de toute nature connue en soi. Les déchets solides non combustibles sont recueillis à l'aide de la vis d'extraction **71**, montée à l'intérieur d'un canal **72** aménagé dans le fond du foyer **29** dans le prolongement de la goulotte **70** du four. Il est à noter que la vis d'extraction **71** est également montée dans la base du cyclone **III** pour récupérer les déchets solides.
   L'installation selon l'invention permet une combustion complète des déchets tout en assurant la récupération de l'énergie produite lors de la postcombustion des fumées. L'échangeur de chaleur **40** proposé permet d'obtenir un bon rendement de transformation de l'énergie utilisée. Pour améliorer le rendement de l'installation, il est à noter que le brûleur **8** peut être coupé temporairement tout en assurant une complète combustion des déchets et une postcombustion des fumées. Il est à noter que dans le cas de déchets de nature combustible, le brûleur **8** peut fonctionner uniquement lors de la mise en marche du four pour permettre d'enflammer les déchets. En effet, le brûleur ne s'avère pas nécessaire car la combustion s'effectue dans une ambiante chaude n'imposant pas un apport supplémentaire d'énergie.
   Il doit être compris que le brûleur **8** est mis en fonctionnement uniquement pour placer et maintenir le foyer à une température chaude assurant la combustion des déchets. Lors de l'arrêt du brûleur **8**, le tube de sortie **9** du brûleur est retiré du foyer et l'orifice **10** est fermé par le volet d'obturation **12**. Par ailleurs, il est à noter que la chambre de postcombustion **29** peut être équipée d'un brûleur non représenté, destiné à être monté sur un conduit **74** permettant de faire fonctionner la chaudière de chauffage en l'absence de fonctionnement du four **I**. Dans ce cas, le conduit **74** est obturé par une trappe non représentée.
   Il est à noter que les calories récupérées peuvent être utilisées pour également assurer un séchage préalable des déchets avant leur introduction dans le four **I**. Bien entendu, il peut être envisagé d'assurer un séchage préalable des déchets par tout autre moyen adapté.
   L'invention n'est pas limitée aux exemples décrits et représentés, car diverses modifications peuvent y être apportées sans sortir de son cadre.

## Revendications

1. Procédé de traitement par combustion de déchets (**1**) et de récupération de chaleur, du type consistant :
- à créer un foyer de combustion (**2**) dans un four (**I**),
- à alimenter en déchets le foyer de combustion (**2**) dans lequel est amené un premier comburant, de manière à brûler les déchets et à obtenir des fumées de combustion (**f**),
- à canaliser les fumées de combustion (**f**) dans une chambre de postcombustion (**29**) dans laquelle est amené un second comburant,
- à assurer l'inflammation des fumées (**f**) pour assurer la combustion des fumées et l'obtention de gaz et fumées (**F**),
- et à faire circuler les gaz et fumées (**F**) dans un échangeur de chaleur (**40**) dont le foyer est constitué par la chambre de postcombustion (**29**),
caractérisé en ce qu'il consiste :
. à déverser les déchets sur un système (**16**) de dispersion des déchets à l'intérieur du foyer de combustion (**2**),
. et à assurer l'amenée du premier comburant par l'intermédiaire au moins du système (**16**) de dispersion des déchets.

2. Procédé selon la revendication **1**, caractérisé en ce qu'il consiste à assurer l'inflammation des fumées (**f**) par l'amenée d'un second comburant chauffé par le foyer de combustion (**2**).

3. Procédé selon la revendication 1, caractérisé en ce qu'il consiste à assurer l'amenée du premier comburant par l'intermédiaire également de l'amenée de déchets.

4. Installation de traitement par combustion de déchets et de récupération de chaleur, du type comportant :
- un four de combustion (**I**) comprenant :
. un foyer de combustion (**2**) pourvu d'un orifice de déversement (**4**) des déchets amenés par des moyens d'approvisionnement (**5**),
. des moyens (**21**) de fourniture d'un premier comburant pour permettre la combustion des déchets et l'obtention de fumées de combustion (**f**),
. un système (**28**) de canalisation des fumées de combustion,
- une chaudière de chauffage (**II**) comportant :
. une chambre de postcombustion (**29**) dans laquelle débouchent le système (**28**) de canalisation des fumées et des moyens (**32**) de fourniture d'un second comburant pour assurer la combustion des fumées dans la chambre de postcombustion, en vue d'obtenir des gaz et fumées (**F**),
. et un échangeur de chaleur (**40**) entre un circuit (**52**) de circulation d'un fluide caloporteur et un circuit (**59**) de circulation des gaz et fumées issus de la chambre de postcombustion,
caractérisée en ce que qu'elle comporte :
- un brûleur (**8**) associé au foyer de combustion (**2**),
- un système (**16**) de dispersion des déchets à l'intérieur du foyer de combustion,
- et des moyens (**21**) de fourniture du premier comburant au niveau du système (**16**) de dispersion des déchets.

5. Installation selon la revendication 4, caractérisée en ce que le système de dispersion (**16**) des déchets est constitué par une grille interposée entre l'orifice de déversement et le brûleur, la grille étant réalisée à partir de tubes (**17, 17**_{**1**}) constituant un moyen de fourniture du premier comburant.

6. Installation selon la revendication 4, caractérisée en ce que les moyens (**5**) d'approvisionnement en déchets sont associés à un moyen de fourniture d'un premier comburant.

7. Installation selon la revendication 4, caractérisée en ce que les moyens de fourniture d'un second comburant sont constitués par au moins une canne (**17**_{**1**}) reliée à un circuit de fourniture du second comburant et s'étendant à l'intérieur du foyer de combustion (**2**) pour déboucher dans le système (**28**) de canalisation des fumées de combustion.

8. Installation selon la revendication 7, caractérisée en ce que le système de canalisation des fumées de combustion (**28**) est constitué par un canal (**30**) s'évasant à l'intérieur du foyer de combustion (**2**) et débouchant dans la chambre de postcombustion (**29**), la sortie de la canne (**17**_{**1**}) de fourniture du second comburant s'établissant à l'entrée du canal (**30**).

9. Installation selon l'une des revendications 4 à 8, caractérisée en ce qu'elle comporte des moyens (**71**) d'extraction des déchets solides non combustibles placés dans le fond du foyer de combustion (**2**) et de la chambre de postcombustion (**29**).

10. Installation selon la revendication 4, caractérisée en ce que l'échangeur de chaleur (**40**) comporte :
- une virole (**45**) raccordée d'un côté sur une chambre de mélange (**46**) et de l'autre côté, sur une coiffe (**43**) délimitant une capacité lamellaire (**L**) avec une enveloppe (**44**) qui constitue en partie, la chambre de postcombustion (**29**),
- et des tubes échangeurs (**47**) traversant la chambre de mélange (**46**) et la virole (**45**), en vue d'être fixés sur l'enveloppe pour constituer intérieurement un circuit (**59**) de circulation des gaz et fumées issus de la chambre de postcombustion et par leurs parois, des capacités d'échange avec un circuit (**52**) de circulation d'un fluide caloporteur destiné à être contenu à l'intérieur de la chambre de mélange, de la virole et de la capacité lamellaire.

11. Installation selon la revendication 4 ou 10, caractérisée en ce que la chambre de postcombustion (**29**) est équipée d'un brûleur auxiliaire.

12. Installation selon la revendication 4, caractérisée en ce que le foyer de combustion (**2**) est pourvu d'un volet (**12**) d'obturation de l'orifice de passage du brûleur (**8**).

13. Installation selon l'une des revendications 4 et 10, caractérisée en ce que l'échangeur de chaleur (**40**) est raccordé à une unité (**III**) de traitement des gaz et fumées.

14. Installation selon la revendication 4, caractérisée en ce que les moyens (**5**) d'approvisionnement en déchets sont équipés en amont, d'une unité de broyage, afin d'obtenir des déchets sous forme de particules.

15. Installation selon la revendication 4 ou 14, caractérisée en ce que les moyens (**5**) d'approvisionnement en déchets sont équipés d'un poste de séchage des déchets.
